# EUROPEAN PATENT SPECIFICATION

(11) **EP 2 047 412 B1**
(45) Date of publication and mention of the grant of the patent: **17.06.2015**
(21) Application number: 07768408.2
(22) Date of filing: 06.07.2007
(51) Int. Cl.: G06F 21/77

(54) **INFORMATION STORAGE MEDIUM AND INFORMATION STORAGE MEDIUM PROCESSING APPARATUS**
INFORMATIONSSPEICHERMEDIUM UND INFORMATIONSSPEICHERMEDIUM-VERARBEITUNGSVORRICHTUNG
SUPPORT DE DONNÉES ET APPAREIL DE TRAITEMENT DE SUPPORT DE DONNÉES

(30) Priority: 27.07.2006 JP 2006205129
(43) Date of publication of application: 15.04.2009
(73) Proprietor: Kabushiki Kaisha Toshiba, Minato-ku, Tokyo 105-8001 (JP)
(72) Inventor: ISHIBASHI, Norio, Tokyo 105-8001 (JP)
(74) Representative: Delumeau, François Guy
(86) International application number: PCT/JP2007/063939
(87) International publication number: WO 2008/013066

(56) References cited:
- WO-A1-2006/072978
- JP-A- 02 045 893
- JP-A- 2001 060 259
- JP-A- 2003 132 313
- JP-A- 2004 046 408
- JP-A- 2004 062 556
- JP-U- 02 145 463

## Description

### Technical Field

One embodiment of the invention relates to an information storage medium which incorporates a nonvolatile data memory, and an IC (integrated circuit) chip having control elements such as a CPU and the like, and is so-called an IC card. Also, another embodiment of the invention relates to an information storage medium processing apparatus which writes and reads out data to and from such information storage medium, and is so-called an IC card reader/writer.

### Background Art

In recent years, non-contact IC cards have been improved, and can be used more conveniently. At the same time, since information is wirelessly transmitted from non-contact IC cards, leakage of information during communications is an issue. For this reason, IC cards (combined cards) which are compatible to both contact and non-contact communications have gotten a lot of attention.

JP-A 2003-168092 (KOKAI) proposes an IC card compatible to transmission protocols of contact and non-contact communications. This IC card can be used in both contact and non-contact modes. That is, the IC card receives commands from an external device in both the contact and non-contact modes, and checks if the commands are received in the contact or non-contact mode. Then, the IC card executes an application program corresponding to the commands, and outputs the execution result to the external device. This IC card extracts command information included in fields of commands received from the external device, so that the application program is accessible to the extracted command information. Since the application program is accessible to the command information included in respective fields of the commands received from the external device, the commands can be reliably transferred to the application program while absorbing the difference between the transmission protocols of the contact and non-contact modes, and the command execution results can be reliably transmitted (output) to the external device.

JP-A 2004-78444 (KOKAI) proposes an IC card that allows, via one of contact and non-contact access control means, access to a data storage area corresponding to the other access control means. In this IC card, a non-contact data file link file required to access a non-contact data file, and a non-contact authentication link file used to acquire an authentication key required to access a contact data file are prepared in a contact data storage area. Upon accessing a data file in a non-contact data storage area from a contact type host device via a contact IF, authentication for the non-contact mode is done based on the non-contact authentication link file. If the authentication is OK, the data file in the non-contact data storage area is accessed based on the non-contact file link file.

Nowadays, since various non-contact IC cards and contact IC cards such as ETC cards and the like have prevailed, readers/writers for these non-contact and contact IC cards have also prevailed, and the general user can check communication data between an IC card and reader/writer.

Of course, it is not easy for the user to directly access specific secret data in the card if he or she can check the communication data. The specific secret data in the card is protected by a method of "encrypting commands/responses as data in communications and further appending a signature", or a method of "complicating conditions required to access secret information".

JP-A 2003-132313 (KOKAI) discloses a technique for selectively using the communication schemes of a combined card in accordance with security levels. That is, the communication schemes of the combined card are selectively used in accordance with the importance of security, that of shortening of a communication processing time, that of an easy communication action, the frequency of the communication action, and the like.

However, the security of the IC card is not high enough by only the aforementioned measures, and further security measures are demanded.

### Disclosure of Invention

It is an object of the invention to provide an information storage medium and an information storage medium processing apparatus which are excellent in security.

An IC card according to one embodiment of the invention comprises a first communication unit configured to communicate with an IC card processing apparatus in a contact state, a second communication unit configured to communicate with the IC card processing apparatus in a non-contact state, a storage unit configured to store information, and an execution unit configured to execute predetermined processing based on the information stored in the storage unit using information processing results of both the first communication unit and the second communication unit, wherein the execution unit executes authentication processing for the predetermined processing by a communication with one of the first communication unit and the second communication unit, and executes authentication processing for the predetermined processing by a communication with the other of the first communication unit and the second communication unit, the execution unit executes the predetermined processing under a condition that both the first communication unit and the second communication unit have succeeded in authentication processing for the predetermined processing, and wherein each authentication processing includes verifying a verification key, said keys being stored by the IC card before said both authentication processings.

An IC card processing apparatus according to one embodiment of the invention comprises a first communication unit configured to communicate with an IC card in a contact state, a second communication unit configured to communicate with the IC card in a non-contact state, and a request unit configured to request the IC card to execute predetermined processing via information processing by both the first communication unit and the second communication unit, wherein the request unit executes authentication processing for the predetermined processing by both the first communication unit and the second communication unit and requests the predetermined processing, and wherein each authentication processing includes verifying a verification key, said keys being stored by the IC card before said both authentication processings.

Additional advantages of the invention will be set forth in the description which follows, and in part will be obvious from the description, or may be learned by practice of the invention. The advantages of the invention may be realized and obtained by means of the instrumentalities and combinations particularly pointed out hereinafter.

### Brief description of drawings

FIG. 1 is a schematic block diagram showing the arrangement of an IC card according to an embodiment of the invention;
FIG. 2 is a view showing the presence of applications A and B in the IC card according to the embodiment;
FIG. 3 is a schematic block diagram showing the arrangement of an IC card reader/writer according to the embodiment;
FIG. 4 is a flowchart showing a first example of communication processing by a plurality of communication means;
FIG. 5 is a flowchart showing a second example of communication processing by a plurality of communication means;
FIG. 6 is a flowchart showing a first example of a communication error; and
FIG. 7 is a flowchart showing a second example of a communication error.

### Best Mode for Carrying Out the Invention

One embodiment of the invention will described hereinafter with reference to the accompanying drawings.

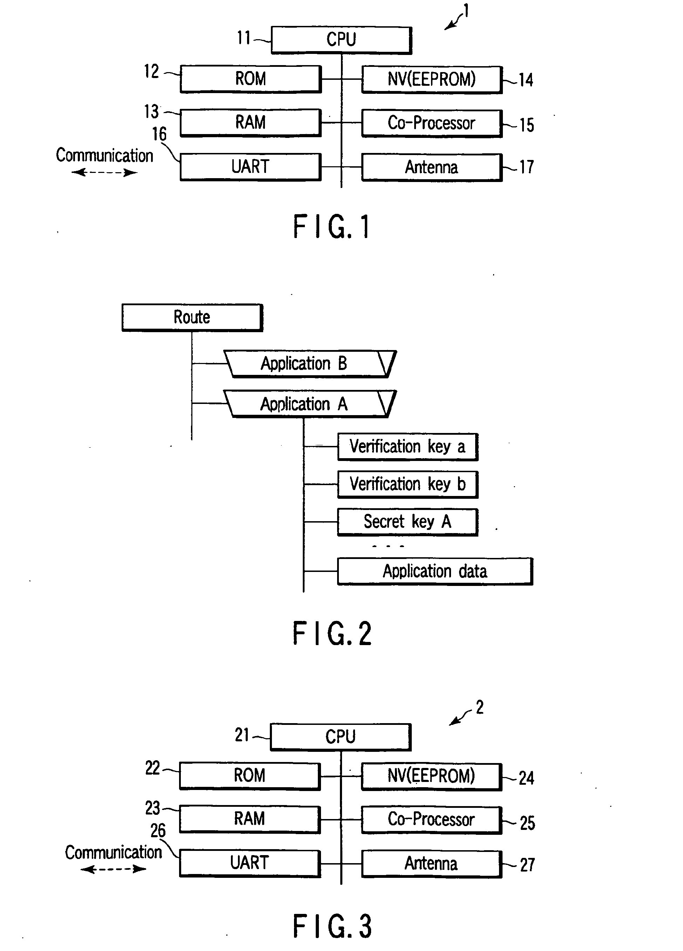

FIG. 1 is a schematic block diagram showing the arrangement of an IC card according to an embodiment of the present invention. As shown in FIG. 1, an IC card 1 comprises a CPU 11, ROM 12, RAM 13, nonvolatile memory (EEPROM) 14, co-processor 15, UART (Universal Asynchronous Receiver/Transmitter) 16, and antenna 17.

The CPU 11 executes a specific command. The UART 16 serves as a contact communication I/F. The antenna 17 serves as a non-contact communication I/F. With these I/Fs, the IC card 1 permits access to a specific storage area (ROM 12 or nonvolatile memory 14) under the condition that the access is authenticated in both a first communication protocol using the contact communication I/F (contact protocol) and a second communication protocol using the non-contact communication I/F (non-contact protocol), and executes specific command processing.

FIG. 3 is a schematic block diagram showing the arrangement of an IC card reader/writer according to the embodiment of the invention. As shown in FIG. 3, an IC card reader/writer 2 comprises a CPU 21, ROM 22, RAM 23, nonvolatile memory 24, co-processor 25, UART 26, and antenna 27.

The CPU 21 executes a specific command. The UART 26 serves as a contact communication I/F. The antenna 27 serves as a non-contact communication I/F. With these I/Fs, the IC card reader/writer 2 requires authentication processing in the contact protocol using the contact communication I/F and the non-contact protocol using the non-contact communication I/F, and further requests specific command processing.

In this embodiment, in order to prevent leakage of communication data, a plurality of routes of the communication data are prepared to make exploration of the communication data by an ill-disposed person difficult. For example, the security of the IC card is enhanced by a plurality of communication means in addition to the methods of encrypting communication data, appending a signature, and complicating access to secret information.

Details of communications using a plurality of communication means will be described below. In the IC card 1, applications A and B are present, as shown in FIG. 2. That is, the IC card 1 stores applications A and B. For example, secret key A, verification key a, verification key b, application data, and the like are present in application A. That is, the IC card 1 stores secret key A, verification key a, verification key b, application data, and the like. This secret key A is an important secret key which is used to generate a signature in the application, and is inhibited from being read out externally, and only a card issuer can update (rewrite) the secret key. The card issuer can update secret key A only when he or she verifies verification key a. by the contact protocol and verification key b by the non-contact protocol.

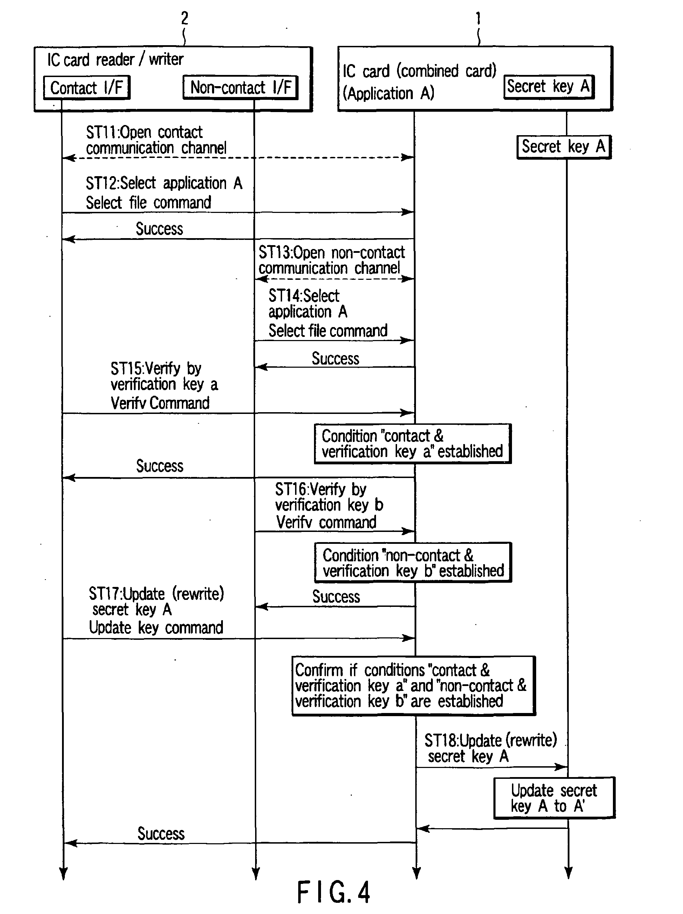

FIG. 4 is a flowchart showing a first example of communication processing by a plurality of communication means.
ST11: The contact communication I/F (UART 26) of the reader/writer 2 activates the IC card 1 via the contact I/F (UART 16) of the IC card 1, thus setting the IC card 1 in a communicable state using the contact protocol (e.g., T = 1 protocol).
ST12: The contact communication I/F of the reader/writer 2 executes a SELECT FILE command so as to select application A in the IC card 1 using the contact protocol. In the IC card 1, application A is assigned to a current application in the contact protocol.
ST13: The non-contact communication I/F (antenna 27) of the reader/writer 2 sets a communicable state using the non-contact protocol (e.g., T = CL protocol) of the IC card 1 via the non-contact I/F (antenna 17) of the IC card 1.
ST14: The non-contact communication I/F of the reader/writer 2 executes a SELECT FILE command so as to select application A in the IC card 1 using the non-contact protocol. In the IC card 1, application A is assigned to a current application in the non-contact protocol.
ST15: The contact communication I/F of the reader/writer 2 verifies verification key a by a Verify command using the contact protocol. Application A starts verification after confirmation of the authenticity of the command. When two requirements: "the verification result is authentic" and "the Verify command is transmitted in the contact protocol" are met, the IC card 1 stores establishment of the condition "contact & verification key a", and the contact communication I/F of the IC card 1 returns a normal termination response to that of the reader/writer 2.
ST16: The non-contact communication I/F of the reader/writer 2 verifies verification key b by a Verify command using the non-contact protocol. Application A starts verification after confirmation of the authenticity of the command. When two requirements: "the verification result is authentic" and "the Verify command is transmitted in the non-contact protocol" are met, the IC card 1 stores establishment of the condition "non-contact & verification key b", and the non-contact communication I/F of the IC card 1 returns a normal termination response to that of the reader/writer 2.
ST17: The contact communication I/F of the reader/writer 2 executes an Update Key command using the contact protocol so as to update secret key A.
ST18: Application A confirms whether or not both the conditions "contact & verification key a" and "non-contact & verification key b" are established after confirmation of the authenticity of the command. If both the conditions are established, secret key A is updated to new secret key A' derived from data included in the received command, and the contact communication I/F of the IC card 1 returns a normal termination response to that of the reader/writer 2.

After that, the secret key is updated to A' and can be used.

Note that the first example of the aforementioned communication processing can be practiced by, e.g., modifying it as follows.
(1) The order of the contact communications in STI1 and ST12 and the non-contact communications in ST13 and ST14 may be replaced. That is, after execution of the non-contact communications in ST13 and ST14, the contact communications in ST11 and ST12 may be executed.
(2) The order of the contact communication in ST15 and the non-contact communication in ST16 may be replaced. That is, after execution of the non-contact communication in ST16, the contact communication in ST15 may be executed.
(3) The contact communication in ST17 may be implemented by a non-contact communication.

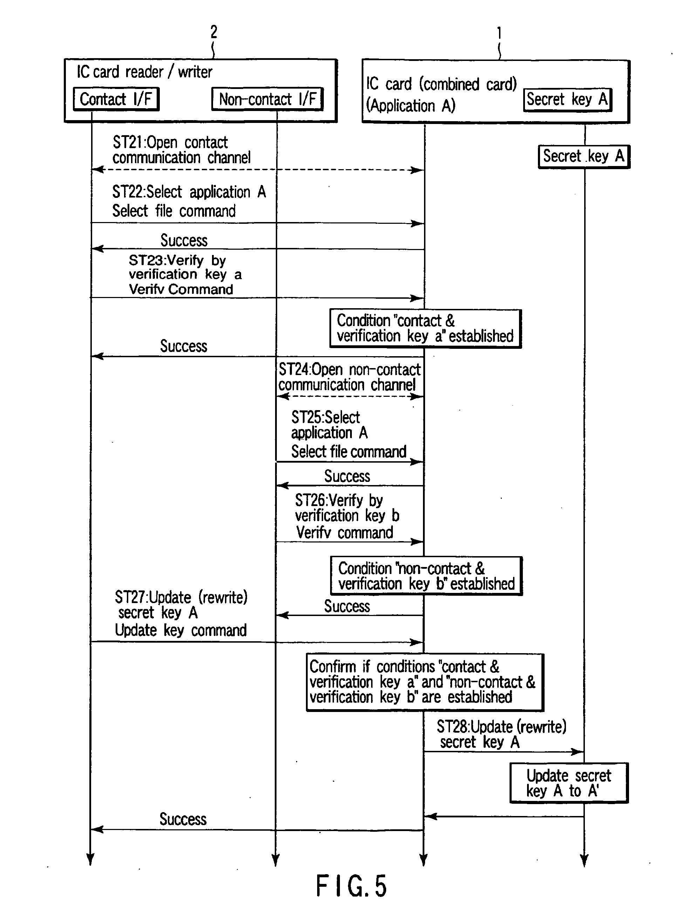

The second example of the communication processing using the plurality of communication means will be described below. FIG. 5 is a flowchart for explaining the second example of the communication processing using the plurality of communication means.
ST21: The contact communication I/F (UART 26) of the reader/writer 2 activates the IC card 1 via the contact I/F (UART 16) of the IC card 1, thus setting the IC card 1 in a communicable state using the contact protocol (e.g., T = 1 protocol).
ST22: The contact communication I/F of the reader/writer 2 executes a SELECT FILE command so as to select application A in the IC card 1 using the contact protocol. In the IC card 1, application A is assigned to a current application in the contact protocol.
ST23: The contact communication I/F of the reader/writer 2 verifies verification key a by a Verify command using the contact protocol. Application A starts verification after confirmation of the authenticity of the command. When two requirements: "the verification result is authentic" and "the Verify command is transmitted in the contact protocol" are met, the IC card 1 stores establishment of the condition "contact & verification key a", and the contact communication I/F of the IC card 1 returns a normal termination response to that of the reader/writer 2. Then, the IC card 1 is deactivated.
ST24: The non-contact communication I/F (antenna 27) of the reader/writer 2 activates the IC card 1 via the non-contact I/F (antenna 17) of the IC card 1, and sets it in a communicable state using the non-contact protocol (e.g., T = CL protocol) of the IC card 1.
ST25: The non-contact communication I/F of the reader/writer 2 executes a SELECT FILE command so as to select application A in the IC card 1 using the contact protocol. In the IC card 1, application A is assigned to a current application in the non-contact protocol.
ST26: The non-contact communication I/F of the reader/writer 2 verifies verification key b by a Verify command using the non-contact protocol. Application A starts verification after confirmation of the authenticity of the command. When two requirements: "the verification result is authentic" and "the Verify command is transmitted in the non-contact protocol" are met, the IC card 1 stores establishment of the condition "non-contact & verification key b", and the non-contact communication I/F of the IC card 1 returns a normal termination response to that of the reader/writer 2. Then, the IC card 1 is deactivated.
ST27: The contact communication I/F of the reader/writer 2 activates the IC card 1 via the contact I/F of the IC card 1, and executes an Update Key command using the contact protocol so as to update secret key A.
ST28: Application A confirms whether or not both the conditions "contact & verification key a" and "non-contact & verification key b" are established after confirmation of the authenticity of the command. If both the conditions are established, secret key A is updated to new secret key A' derived from data included in the received command, and the contact communication I/F of the IC card 1 returns a normal termination response to that of the reader/writer 2.

After that, the secret key is updated to A' and can be used.

Note that the second example of the aforementioned communication processing can be practiced by, e.g., modifying it as follows.
(1) The order of the contact communications in ST21, ST22, and ST23 and the non-contact communications in ST24, ST25, and ST26 may be replaced. That is, after execution of the non-contact communications in ST24, ST25, and ST26, the contact communications in ST21, ST22, and ST23 may be executed.
(2) The contact communication in ST27 may be implemented by a non-contact communication.
(3) After the normal termination response is returned in ST26, the process may advance to the update processing in ST27 without deactivating the IC card 1.

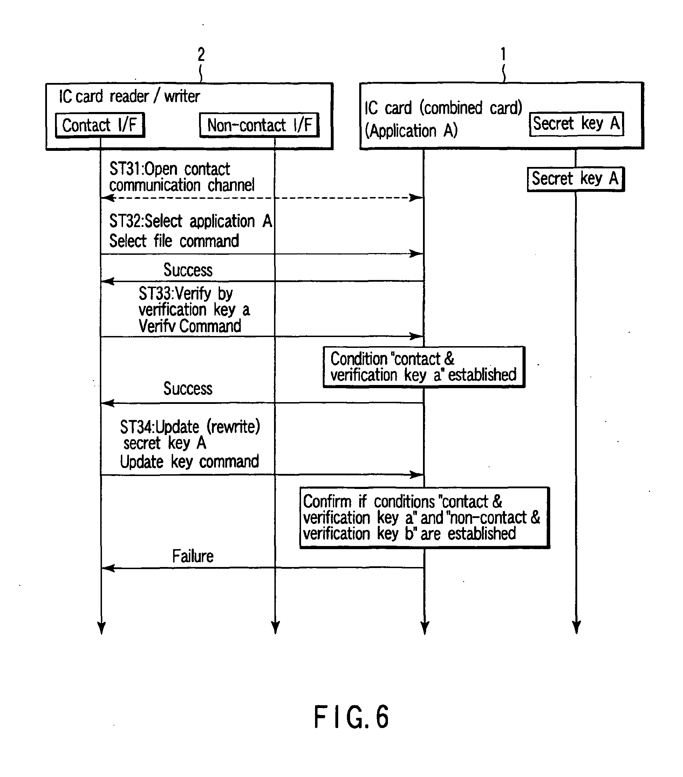

A case corresponding to a communication error will be described below with reference to FIG. 6. FIG. 6 is a flowchart showing the first example of a communication error.
ST31: The contact communication I/F (UART 26) of the reader/writer 2 activates the IC card 1 via the contact I/F (UART 16) of the IC card 1, thus setting a communicable state using the contact protocol (e.g., T = 1 protocol).
ST32: The contact communication I/F of the reader/writer 2 executes a SELECT FILE command so as to select application A in the IC card 1 using the contact protocol. In the IC card 1, application A is assigned to a current application in the contact protocol.
ST33: The contact communication I/F of the reader/writer 2 verifies verification key a by a Verify command using the contact protocol. Application A starts verification after confirmation of the authenticity of the command. When two requirements: "the verification result is authentic" and "the Verify command is transmitted in the contact protocol" are met, the IC card 1 stores establishment of the condition "contact & verification key a", and the contact communication I/F of the IC card 1 returns a normal termination response to that of the reader/writer 2.
ST34: The contact communication I/F of the reader/writer 2 executes an Update Key command using the contact protocol so as to update secret key A. Application A confirms whether or not both the conditions "contact & verification key a" and "non-contact & verification key b" are established after confirmation of the authenticity of the command. In this case, however, application A cannot confirm establishment of both the conditions. That is, since verification of verification key b by the non-contact protocol does not terminate normally, application A determines that the conditions required to update secret key A are not established, and the contact communication I/F of the IC card 1 returns an abnormal termination response to that of the reader/writer 2 without updating secret key A.

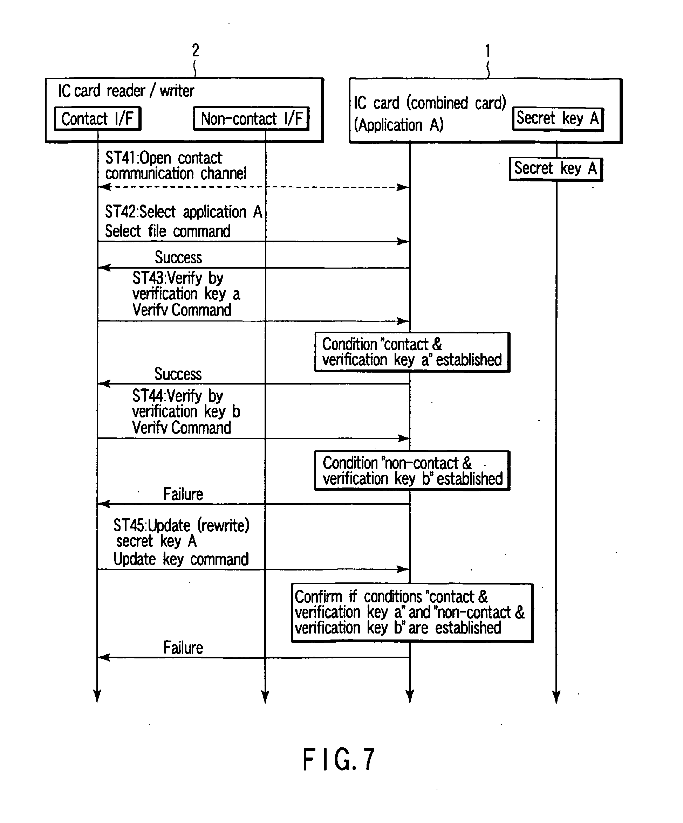

Furthermore, another case corresponding to a communication error will be described below with reference to FIG. 7. FIG. 7 is a flowchart showing the second example of a communication error.

The CPU 11 of the IC card 1 checks if the processes are executed based on the prescribed processing order stored in the ROM 12 or the like, and determines an error if the processes are not executed based on the prescribed processing order. For example, assume that verification of verification key b using the non-contact protocol after that of verification key a using the contact protocol is determined as the prescribed processing order. Under this prescription, a communication error will be explained.
ST41: The contact communication I/F (UART 26) of the reader/writer 2 activates the IC card 1 via the contact I/F (UART 16) of the IC card 1, thus setting a communicable state using the contact protocol (e.g., T = 1 protocol).
ST42: The contact communication I/F of the reader/writer 2 executes a SELECT FILE command so as to select application A in the IC card 1 using the contact protocol. In the IC card 1, application A is assigned to a current application in the contact protocol.
ST43: The contact communication I/F of the reader/writer 2 verifies verification key a by a Verify command using the contact protocol. In application A, verification is started after the authenticity of the command is confirmed. When two requirements: "the verification result is authentic" and "the Verify command is transmitted in the contact protocol" are met, the IC card 1 stores establishment of the condition "contact & verification key a", and the contact communication I/F of the IC card 1 returns a normal termination response to that of the reader/writer 2.
ST44: The contact communication I/F of the reader/writer 2 verifies verification key b by a Verify command using the contact protocol. Application A starts verification after confirmation of the authenticity of the command. When two requirements: "the verification result is authentic" and "the Verify command is transmitted in the non-contact protocol" are met, the IC card 1 stores establishment of the condition "non-contact & verification key b". In this case, however, since these two requirements are not met, application A determines that the condition is not established. Based on the determination result of application A, the contact communication I/F of the IC card 1 returns an abnormal termination response to that of the reader/writer 2.
ST45: The contact communication I/F of the reader/writer 2 executes an Update Key command using the contact protocol so as to update secret key A. Application A confirms whether or not both the conditions "contact & verification key a" and "non-contact & verification key b" are established after confirmation of the authenticity of the command. In this case, however, application A cannot confirm establishment of both the conditions. That is, since verification of verification key b by the non-contact protocol does not terminate normally, application A determines that the conditions required to update secret key A are not established, and the contact communication I/F of the IC card 1 returns an abnormal termination response to that of the reader/writer 2 without updating secret key A.

Note that the aforementioned second example of a communication error may erase establishment of the condition "contact & verification key a" stored in ST43 based on the determination result in ST44 indicating that the condition is not established.

This embodiment will be summarized below.
(1) When the IC card is activated by one of the contact and non-contact I/Fs and authentication is executed, the IC card holds the contents of the authentication in the nonvolatile memory. After the IC card is temporarily deactivated, when it is activated by the other I/F and authentication is executed, the IC card determines that the security conditions are established when the authentication processes by the two I/Fs have succeeded, and permits access from the I/F in connection.
(2) The IC card makes communications while switching the contact and non-contact I/Fs. The IC card determines that the security conditions are established when the authentication processes by the two I/Fs have successively succeeded, and permits accesses from the two I/Fs.
(3) When a procedure other than the prescribed authentication procedure ((1) or (2) above) is executed, the IC card immediately determines that the security conditions are not established as well as the intermediate authentication result, and denies access.

More specifically, this embodiment is as follows.

The IC card determines the authenticity of processing based on both the result of authentication (verification) itself and the type of protocol of a command that prompts execution. That is, the IC card determines, as independent authentication (verification) results, the result authenticated (verified) by a specific command of the non-contact protocol via the non-contact communication I/F and the result authenticated (verified) by a specific command of the contact protocol via the contact communication I/F, and then permits the following operations when both the commands normally terminate:
1) to update security status of the overall card and to access specific data in the card;
2) to update security status in a DF and to access specific data under the DF;
3) to update security status in the DF and to execute a specific command under the DF;
4) to update security status in an application, and to access specific data under the application; and
5) to update security status in the application and to execute a specific command under the application.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An IC card (1) comprising:
a first communication unit (16) configured to communicate with an IC card processing apparatus in a contact state;
a second communication unit (17) configured to communicate with the IC card processing apparatus in a non-contact state;
a storage unit (12, 14) configured to store information; and
an execution unit (11) configured to execute predetermined processing based on the information stored in the storage unit using information processing results of both the first communication unit and the second communication unit,
wherein the execution unit (11) executes authentication processing for the predetermined processing by a communication with one of the first communication unit and the second communication unit, and executes authentication processing for the predetermined processing by a communication with the other of the first communication unit and the second communication unit,
the execution unit executes the predetermined processing under a condition that both the first communication unit and the second communication unit have succeeded in authentication processing for the predetermined processing, and
wherein each authentication processing includes verifying a verification key (a b), said keys being stored by the IC card before said both authentication processings.

2. An IC card according to claim 1, wherein the execution unit (11) is activated by a communication with one of the first communication unit and the second communication unit to execute authentication processing for the predetermined processing, stores an authentication processing result in the storage unit, and is deactivated, and the execution unit is activated by a communication with the other of the first communication unit and the second communication unit to execute authentication processing for the predetermined processing, and stores an authentication processing result in the storage unit, and the execution unit executes the predetermined processing under a condition that the two authentication processing results stored in the storage unit indicate successful authentication.

3. An IC card according to claim 2, wherein the execution unit (11) determines as an error authentication processing by the first communication unit and the second communication unit that does not correspond to a prescribed authentication processing order of the first communication unit and the second communication unit, and does not permit execution of the predetermined processing.

4. An IC card according to claim 3, wherein when the execution unit (11) stores the authentication processing result in the storage unit via the communication with one of the first communication unit and the second communication unit, and the same communication unit executes a communication again, the execution unit deletes the authentication processing result stored in the storage unit.

5. An IC card according to claim 1, wherein the execution unit (11) is activated by a communication with at least one of the first communication unit and the second communication unit, executes authentication processing for the predetermined processing using both the first communication unit and the second communication unit by switching the first communication unit and the second communication unit, stores authentication processing results in the storage unit, and executes the predetermined processing under a condition that the two authentication processing results stored in the storage unit indicate successful authentication.

6. An IC card according to claim 1, wherein the storage unit (12, 14) stores a secret key, and
the execution unit updates the secret key in response to an update request of the secret key under a condition that the authentication processes of both the first communication unit and the second communication unit have succeeded.

7. An IC card processing apparatus (2) comprising:
a first communication unit (26) configured to communicate with an IC card (1) in a contact state;
a second communication unit (27) configured to communicate with the IC card (1) in a non-contact state; and
a request unit (21) configured to request the IC card (1) to execute predetermined processing via information processing by both the first communication unit and the second communication unit,
wherein the request unit (21) executes authentication processing for the predetermined processing by both the first communication unit and the second communication unit and requests the predetermined processing, and
wherein each authentication processing includes verifying a verification key, said keys being stored by the IC card (1) before said both authentication processings.

8. An apparatus according to claim 7, wherein the request unit (21) activates IC card medium by a communication with one of the first communication unit and the second communication unit to execute authentication processing for the predetermined processing, activates le card by a communication with the other of the first communication unit and the second communication unit to execute authentication processing for the predetermined processing, and requests the predetermined processing.

9. An apparatus according to claim 8, wherein the request unit (21) executes the authentication processing based on a prescribed authentication processing order of the first communication unit and the second communication unit.

10. An apparatus according to claim 7, wherein the request unit (21) activates IC card by a communication with at least one of the first communication unit and the second communication unit, executes authentication processing for the predetermined processing using both the first communication unit and the second communication unit by switching the first communication unit and the second communication unit, and requests the predetermined processing.

## Patentansprüche

1. IC-Karte (1), umfassend:
eine erste Kommunikationseinheit (16), die dazu konfiguriert ist, in einem Kontaktzustand mit einer IC-Karten-Verarbeitungsvorrichtung zu kommunizieren,
eine zweite Kommunikationseinheit (17), die dazu konfiguriert ist, in einem Nicht-Kontaktzustand mit der IC-Karten-Verarbeitungsvorrichtung zu kommunizieren,
eine Speichereinheit (12, 14), die dazu konfiguriert ist, Informationen zu speichern, und
eine Ausführungseinheit (11), die dazu konfiguriert ist, eine vorgegebene Verarbeitung auf der Basis der in der Speichereinheit gespeicherten Informationen unter Verwendung von Informationsverarbeitungsergebnissen sowohl von der ersten Kommunikationseinheit als auch von der zweiten Kommunikationseinheit auszuführen,
wobei die Ausführungseinheit (11) eine Authentifizierungsverarbeitung für die vorgegebene Verarbeitung durch eine Kommunikation mit einer der ersten Kommunikationseinheit und der zweiten Kommunikationseinheit ausführt und eine Authentifizierungsverarbeitung für die vorgegebene Verarbeitung durch eine Kommunikation mit der anderen der ersten Kommunikationseinheit und der zweiten Kommunikationseinheit ausführt,
wobei die Ausführungseinheit die vorgegebene Verarbeitung unter der Bedingung ausführt, dass sowohl die erste Kommunikationseinheit als auch die zweite Kommunikationseinheit eine erfolgreiche Authentifizierungsverarbeitung für die vorgegebene Verarbeitung ausgeführt haben, und
wobei jede Authentifizierungsverarbeitung das Verifizieren eines Verifizierungsschlüssels (a, b) enthält, wobei die Schlüssel vor den beiden Authentifizierungsverarbeitungen durch die IC-Karte gespeichert werden.

2. IC-Karte nach Anspruch 1, wobei die Ausführungseinheit (11) durch eine Kommunikation mit einer der ersten Kommunikationseinheit und der zweiten Kommunikationseinheit aktiviert wird, um eine Authentifizierungsverarbeitung für die vorgegebene Verarbeitung auszuführen, ein Authentifizierungsverarbeitungsergebnis in die Speichereinheit speichert, und deaktiviert wird, und die Ausführungseinheit durch eine Kommunikation mit der anderen der ersten Kommunikationseinheit und der zweiten Kommunikationseinheit aktiviert wird, um eine Authentifizierungsverarbeitung für die vorgegebene Verarbeitung auszuführen, und ein Authentifizierungsverarbeitungsergebnis in die Speichereinheit speichert, und die Ausführungseinheit die vorgegebene Verarbeitung unter der Bedingung ausführt, dass die zwei in der Speichereinheit gespeicherten Authentifizierungsverarbeitungsergebnisse eine erfolgreiche Authentifizierung anzeigen.

3. IC-Karte nach Anspruch 2, wobei die Ausführungseinheit (11) eine Authentifizierungsverarbeitung durch die erste Kommunikationseinheit und die zweite Kommunikationseinheit als einen Fehler bestimmt, die keiner vorgeschriebenen Authentifizierungsverarbeitungsreihenfolge der ersten Kommunikationseinheit und der zweiten Kommunikationseinheit entspricht und keine Ausführung der vorgegebenen Verarbeitung erlaubt.

4. IC-Karte nach Anspruch 3, wobei, wenn die Ausführungseinheit (11) das Authentifizierungsverarbeitungsergebnis in der Speichereinheit über die Kommunikation mit einer der ersten Kommunikationseinheit und der zweiten Kommunikationseinheit speichert und die gleiche Kommunikationseinheit eine Kommunikation erneut ausführt, die Ausführungseinheit das in der Speichereinheit gespeicherte Authentifizierungsverarbeitungsergebnis löscht.

5. IC-Karte nach Anspruch 1, wobei die Ausführungseinheit (11) durch eine Kommunikation mit mindestens einer der ersten Kommunikationseinheit und der zweiten Kommunikationseinheit aktiviert wird, eine Authentifizierungsverarbeitung für die vorgegebene Verarbeitung unter Verwendung sowohl der ersten Kommunikationseinheit als auch der zweiten Kommunikationseinheit durch Umschalten der ersten Kommunikationseinheit und der zweiten Kommunikationseinheit ausführt, Authentifizierungsverarbeitungsergebnisse in der Speichereinheit speichert, und die vorgegebene Verarbeitung unter der Bedingung ausführt, dass die zwei in der Speichereinheit gespeicherten Authentifizierungsverarbeitungsergebnisse eine erfolgreiche Authentifizierung anzeigen.

6. IC-Karte nach Anspruch 1, wobei die Speichereinheit (12, 14) einen geheimen Schlüssel speichert, und
die Ausführungseinheit den geheimen Schlüssel in Reaktion auf eine Aktualisierungsanforderung des geheimen Schlüssels unter der Bedingung aktualisiert, dass die Authentifizierungsprozesse sowohl der ersten Kommunikationseinheit als auch der zweiten Kommunikationseinheit erfolgreich waren.

7. IC-Karten-Verarbeitungsvorrichtung (2), umfassend:
eine erste Kommunikationseinheit (26), die dazu konfiguriert ist, in einem Kontaktzustand mit einer IC-Karte (1) zu kommunizieren,
eine zweite Kommunikationseinheit (27), die dazu konfiguriert ist, in einem Nicht-Kontaktzustand mit der IC-Karte (1) zu kommunizieren, und
eine Anforderungseinheit (21), die dazu konfiguriert ist, die IC-Karte (1) aufzufordern, eine vorgegebene Verarbeitung mittels einer Informationsverarbeitung sowohl durch die erste Kommunikationseinheit als auch die zweite Kommunikationseinheit auszuführen,
wobei die Anforderungseinheit (21) eine Authentifizierungsverarbeitung für die vorgegebene Verarbeitung sowohl durch die erste Kommunikationseinheit als auch die zweite Kommunikationseinheit ausführt und die vorgegebene Verarbeitung anfordert, und
wobei jede Authentifizierungsverarbeitung das Verifizieren eines Verifizierungsschlüssels enthält, wobei die Schlüssel durch die IC-Karte (1) vor den beiden Authentifizierungsverarbeitungen gespeichert werden.

8. Vorrichtung nach Anspruch 7, wobei die Anforderungseinheit (21) das IC-Kartenmedium durch eine Kommunikation mit einer der ersten Kommunikationseinheit und der zweiten Kommunikationseinheit aktiviert, um eine Authentifizierungsverarbeitung für die vorgegebene Verarbeitung auszuführen, die Karte durch eine Kommunikation mit der anderen der ersten Kommunikationseinheit und der zweiten Kommunikationseinheit aktiviert, um eine Authentifizierungsverarbeitung für die vorgegebene Verarbeitung auszuführen, und die vorgegebene Verarbeitung anfordert.

9. Vorrichtung nach Anspruch 8, wobei die Anforderungseinheit (21) die Authentifizierungsverarbeitung auf der Basis einer vorgeschriebenen Authentifizierungsverarbeitungsreihenfolge der ersten Kommunikationseinheit und der zweiten Kommunikationseinheit ausführt.

10. Vorrichtung nach Anspruch 7, wobei die Anforderungseinheit (21) die IC-Karte durch eine Kommunikation mit mindestens einer der ersten Kommunikationseinheit und der zweiten Kommunikationseinheit aktiviert, eine Authentifizierungsverarbeitung für die vorgegebene Verarbeitung unter Verwendung sowohl der ersten Kommunikationseinheit als auch der zweiten Kommunikationseinheit durch Umschalten der ersten Kommunikationseinheit und der zweiten Kommunikationseinheit ausführt, und die vorgegebene Verarbeitung anfordert.

## Revendications

1. Carte à circuit intégré (1) comprenant :
une première unité de communication (16) configurée pour communiquer avec un dispositif de traitement de carte à circuit intégré dans un état avec contact ;
une seconde unité de communication (17) configurée pour communiquer avec le dispositif de traitement de carte à circuit intégré dans un état sans contact ;
une unité de mémorisation (12, 14) configurée pour mémoriser des informations ; et
une unité d'exécution (11) configurée pour exécuter un traitement prédéterminé en se basant sur les informations mémorisées dans l'unité de mémorisation utilisant des résultats de traitement d'informations à la fois de la première unité de communication et de la seconde unité de communication,
dans laquelle l'unité d'exécution (11) exécute un traitement d'authentification pour le traitement prédéterminé par une communication avec une unité parmi la première unité de communication et la seconde unité de communication, et exécute un traitement d'authentification pour le traitement prédéterminé par une communication avec l'autre unité parmi la première unité de communication et la seconde unité de communication,
l'unité d'exécution exécute le traitement prédéterminé à condition qu'à la fois la première unité de communication et la seconde unité de communication aient réussi le traitement d'authentification pour le traitement prédéterminé, et
dans laquelle chaque traitement d'authentification comporte la vérification d'une clé de vérification (a, b), lesdites clés étant mémorisées par la carte à circuit intégré avant lesdits deux traitements d'authentification.

2. Carte à circuit intégré selon la revendication 1, dans laquelle l'unité d'exécution (11) est activée par une communication avec une unité parmi la première unité de communication et la seconde unité de communication pour exécuter un traitement d'authentification pour le traitement prédéterminé, mémorise un résultat de traitement d'authentification dans l'unité de mémorisation et est désactivée, et l'unité d'exécution est activée par une communication avec l'autre unité parmi la première unité de communication et la seconde unité de communication pour exécuter un traitement d'authentification pour le traitement prédéterminé, et mémorise un résultat de traitement d'authentification dans l'unité de mémorisation, et l'unité d'exécution exécute le traitement prédéterminé à condition que les deux résultats de traitement d'authentification mémorisés dans l'unité de mémorisation indiquent la réussite de l'authentification.

3. Carte à circuit intégré selon la revendication 2, dans laquelle l'unité d'exécution (11) détermine en tant qu'erreur un traitement d'authentification par la première unité de communication et la seconde unité de communication ne correspondant pas à un ordre de traitement d'authentification prescrit de la première unité de communication et de la seconde unité de communication, et ne permet pas l'exécution du traitement prédéterminé.

4. Carte à circuit intégré selon la revendication 3, dans laquelle, lorsque l'unité d'exécution (11) mémorise le résultat de traitement d'authentification dans l'unité de mémorisation par l'intermédiaire de la communication avec une unité parmi la première unité de communication et la seconde unité de communication, et la même unité de communication exécute à nouveau une communication, l'unité d'exécution supprime le résultat de traitement d'authentification mémorisé dans l'unité de mémorisation.

5. Carte à circuit intégré selon la revendication 1, dans laquelle l'unité d'exécution (11) est activée par une communication avec, au moins une unité parmi la première unité de communication et la seconde unité de communication, exécute un traitement d'authentification pour le traitement prédéterminé en utilisant à la fois la première unité de communication et la seconde unité de communication par commutation de la première unité de communication et de la seconde unité de communication, mémorise les résultats de traitement d'authentification dans l'unité de mémorisation et exécute le traitement prédéterminé à condition que les deux résultats de traitement d'authentification mémorisés dans l'unité de mémorisation indiquent la réussite de l'authentification.

6. Carte à circuit intégré selon la revendication 1, dans laquelle l'unité de mémorisation (12, 14) mémorise une clé secrète, et
l'unité d'exécution met à jour la clé secrète en réponse à une demande de mise à jour de la clé secrète à condition que les traitements d'authentification à la fois de la première unité de communication et de la seconde unité de communication aient réussi.

7. Dispositif de traitement de carte à circuit intégré (2) comprenant :
une première unité de communication (26) configurée pour communiquer avec une carte à circuit intégré (1) dans un état avec contact ;
une seconde unité de communication (27) configurée pour communiquer avec la carte à circuit intégré (1) dans un état sans contact ; et
une unité de demande (21) configurée pour demander à la carte à circuit intégré (1) d'exécuter un traitement prédéterminé par l'intermédiaire du traitement des informations à la fois par la première unité de communication et la seconde unité de communication,
dans lequel l'unité de demande (21) exécute un traitement d'authentification pour le traitement prédéterminé à la fois par la première unité de communication et la seconde unité de communication et demande le traitement prédéterminé, et
dans lequel chaque traitement d'authentification comporte la vérification d'une clé de vérification, lesdites clés étant mémorisées par la carte à circuit intégré (1) avant lesdits deux traitements d'authentification.

8. Dispositif selon la revendication 7, dans lequel l'unité de demande (21) active un support de carte à circuit intégré au moyen d'une communication avec une unité parmi la première unité de communication et la seconde unité de communication pour exécuter un traitement d'authentification pour le traitement prédéterminé, active la carte par une communication avec l'autre unité parmi la première unité de communication et la seconde unité de communication pour exécuter un traitement d'authentification pour le traitement prédéterminé, et demande le traitement prédéterminé.

9. Dispositif selon la revendication 8, dans lequel l'unité de demande (21) exécute le traitement d'authentification en se basant sur un ordre de traitement d'authentification prescrit de la première unité de communication et de la seconde unité de communication.

10. Dispositif selon la revendication 7, dans lequel l'unité de demande (21) active la carte à circuit intégré au moyen d'une communication avec au moins une unité parmi la première unité de communication et la seconde unité de communication, exécute un traitement d'authentification pour le traitement prédéterminé en utilisant à la fois la première unité de communication et la seconde unité de communication par commutation de la première unité de communication et de la seconde unité de communication, et demande le traitement prédéterminé.
